# EUROPEAN PATENT APPLICATION

(11) **EP 1 585 075 A1**
(43) Date of publication of application: **12.10.2005**
(21) Application number: 04388028.5
(22) Date of filing: 07.04.2004
(51) Int. Cl.: G07F 19/00

(54) **On line billing of real-time content on mobile phones**

(71) Applicant: On-Air A/S, 9200 Aalborg SV (DK)
(72) Inventor: Lindholt, Claus, 9700 Bronderslev (DK); Rodler, Flemming Friche, 9400 Norresundby (DK); Andersen, Jesper, 9000 Aalborg (DK); Pedersen, Michael Haugaard, 9200 Aalborg (DK); Pedersen, Morten, 9230 Svenstrup (DK); Nielsen, Michael, 9320 Hjallerup (DK)
(74) Representative: Andersen, Poul Hoeg

(57) **Abstract**

The present invention relates to a method for a consumer device of performing payment of real time content received from a service provider, wherein said payment is performed while receiving said real time content on said consumer device, said method comprises transmitting a user accepted payment instruction to a payment central, followed by transmitting a payment notification to said service provider, said service provider being adapted for receiving said payment notification at said service provider and continuing to deliver said real time content to said consumer device based on said received payment notification. Thereby e.g. a mobile phone user continuously can pay for downloading real time content using on-line payment e.g. through premium charged Mobile originated SMS and where the content supplier can continue supplying the real time content regardless of the transaction and transfer time of the payment, which thereby becomes a trusted transaction. In an embodiment the method will allow a user account to have a defined line of credit, where content will be delivered regardless of the transaction time of the payment. Once payment information arrives from the payment system, the user account will be updated and credits cleared.

## Description

### FIELD OF THE INVENTION

The present invention relates to a method for a consumer device of performing payment of real time content received from a service provider, wherein said payment is performed while receiving said real time content on said consumer device.

### BACKGROUND OF THE INVENTION

A lot of services are provided from service providers to consumer devices such as mobile phones. Typically these services requires payment and especially when the service is a real time service such as live real time audio or live real time video, payment of the services can be rather troublesome. Some of the methods used are:
- Pre-payment via credit card over the Internet being a standard method used by virtual mobile network operators and other services like purchase of ringing tones and logos.
- Premium charged mobile terminated SMS, where the overcharged SMS is sent to the mobile phone. This method is mostly used for subscription services like weather forecasts, sports results etc.
- Premium charged mobile originated SMS, where the overcharged SMS is sent from the mobile phone. This method is often used for competitions on TV, where the SMS is direct payment and no service is delivered over the phone. Also used for other services like purchase of ringing tones and logos.

A common denominator for the schemes used are is that the user must perform the payment operation before he uses the service or downloads the item purchased or he must terminate his current session and initiate the payment session. In case of the Internet payment he must use a totally different system (PC).

Delivery of an online service such as of streaming video can be paid in advance using one of the prior art methods above. However the user might not know for how long time he wants to watch the video and use the service.

One possible solution could be to use a mobile terminated SMS as this can be initiated by the service and the user does not have to interact. However the mobile terminated SMS has a very low success rate in actual payment of the bill, as the user can deny ever having received the premium charged mobile terminated SMS.

### OBJECT AND SUMMARY OF THE INVENTION

It is therefore an object to provide payment method solving the above mentioned problems.

This is obtained by a method for a consumer device of performing payment of real time content received from a service provider, wherein said payment is performed while receiving said real time content on said consumer device, said method comprises transmitting a user accepted payment instruction to a payment central, followed by transmitting a payment notification to said service provider, said service provider being adapted for receiving said payment notification at said service provider and continuing to deliver said real time content to said consumer device based on said received payment notification.

In a specific embodiment said consumer device is a mobile phone and in an embodiment said payment instructions are transmitted as a SMS from said mobile phone to said payment central.

Thereby e.g. a mobile phone user continuously can pay for downloading real time content using on-line payment e.g. through premium charged Mobile originated SMS and where the content supplier can continue supplying the real time content regardless of the transaction and transfer time of the payment, which thereby becomes a trusted transaction.

As the Service Provider is notified of the payment in progress, he can continue to deliver the service (e.g. live streamed video), and the user is not interrupted to wait for payment processing through the system. This gives the user the expected real time experience. The user can terminate the service at any point, when he does not want to spend more money for the service.

In an embodiment said service provider, after having received said payment notification, continues to deliver said real time content to said consumer device for a predefined time interval within which said service provider needs to receive a payment clearance initiated by said payment central in order to continue delivering said real time content to said device after the expiry of said time interval. This allows a user account to have a defined line of credit, where content will be delivered regardless of the transaction time of the payment. Once payment information arrives from the payment system, the user account will be updated and credits cleared. Should the payment clearance be delayed for a long time of for e.g. technical reason not be transmitted the system can limit the uncertainty to a predefined time interval or cost and preferred and trusted users can have individual lines of credit and thereby individual time intervals.

In a specific embodiment said consumer device receives a request from said service provider when said payment is necessary.

In an embodiment said service provider and said consumer device communicates said real time content and said payment notification using a single port communication protocol, wherein data related to payment notifications and data related to real time content are transmitted in successive blocks/packages via a single port. This enables multi-type data communication to mobile phones and thereby 2.5G mobile telephones can be used for services normally requiring more than one communication port.

In an embodiment said real time content is video content.

### BRIEF DESCRIPTION OF THE DRAWINGS

In the following preferred embodiments of the invention will be described referring to the figures, where
figure 1 illustrates a system operated according to a method of the present invention,
figure 2 illustrates a method of communicating payment notifications while receiving real time content,
figure 3 illustrates a method of performing payment according to the present invention where the consumer device is a mobile phone,

### DESCRIPTION OF PREFERRED EMBODIMENTS

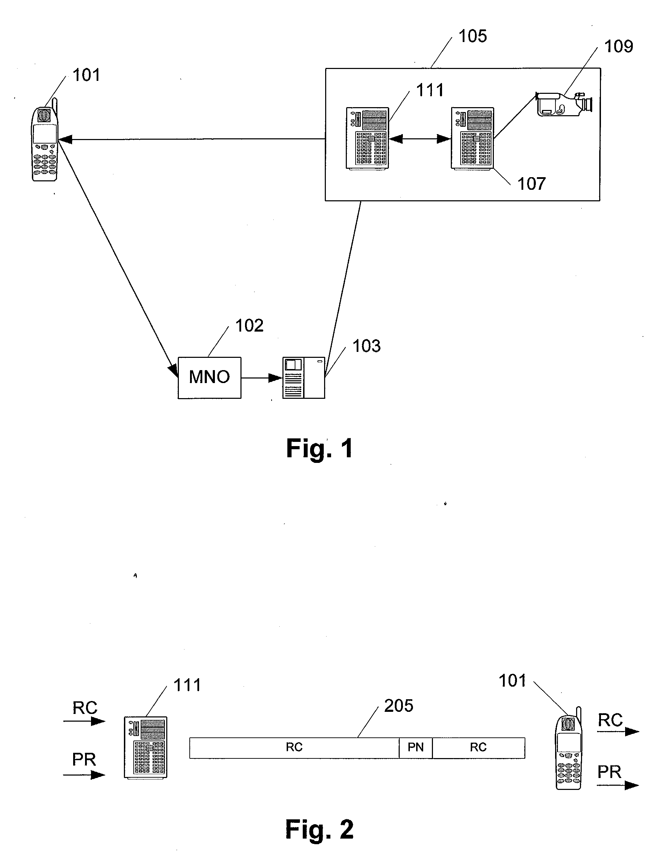

In figure 1 a system is illustrated which can be operated according to a method of the present invention. The system comprises a consumer device 101 being a mobile phone, a payment central 102 and a service provider 105 delivering the real time content to the consumer device 101. The service provider 105 comprises a video server 107 connected to a video camera 109 or a video player 110 for transmitting real time content in the form of video content. The video server 107 transmits the video content to the distribution server 111 via e.g. a standard TCP/IP communication channel. The distribution server 111 distributes the video content and any payment requests to the consumer device 101. When paying for the content, the consumer device 101 transmits a payment instruction to the payment central 102 (i.e. the Mobile Network Operator) who validates the payment against the mobile user account and forwards the message through an aggregator 103. The consumer device 101 further transmits a payment notification to the distribution sever 111 which only continues to deliver the real time content if a payment clearance is received from the payment system 102 and 103 within a predefined time interval.

In figure 2 a method of communicating payment notifications while transmitting real time content is illustrated. The mobile phone being a 2.5G mobile phone is only able to handle single port communication, therefore in order to transmit payment requests of the real time content while the content is being transmitted a single port communication protocol is used which enables multi-type data communication similar to the communication in multi port systems such as fixed IP-networks or 3G mobile networks. According to the single port communication protocol data related to payment and data related to real time content are transmitted in successive blocks/packages. In figure 2 two types of data is illustrated being payment requests (PR) and real time content (RC), the sender multiplexes the two types of data and transmits it in blocks as illustrated by the block 205 comprising two blocks of real time content (RC) and one block with a payment request (PR). Other types of data which could have their own block could be audio or text. At the consumer device the blocks are processed as they arrive by initially identifying the data type in the block and then subsequently processing the data with the appropriate software for handling the data.

An example of usage of the present invention is where the service provider 105 delivers real time video to a consumer device 101 being a 2.5G mobile phone.

Before starting receiving and playing back real time content a player application is downloaded to the mobile phone 101 from e.g. a web site of the service provider 105 e.g. using WAP-Push technology. In this process the make and type of the mobile phone 101 is determined by extracting the mobile phones UAProf (User Agent Profile) and a player application configuration functionality at the service provider 105 builds the correct player application being compatible with the mobile phone 101 in question and at the same time inserts a unique ID that identifies this particular player application.

When the user operating the mobile phone 101 wants to access the player application or service, the client initiates and opens a single port TCP/IP connection using the single port protocol to the distribution server 111. On the distribution server 111 a user proxy is spawned for the connecting client and the distribution server 111 query a local database for the unique ID and thereby the user's account and available credit. If the credit is over a set limit the service will commence and if not the user will be prompted to buy more credit. This will also happen during the on-line live service, when the credit reaches 0 or a low limit.

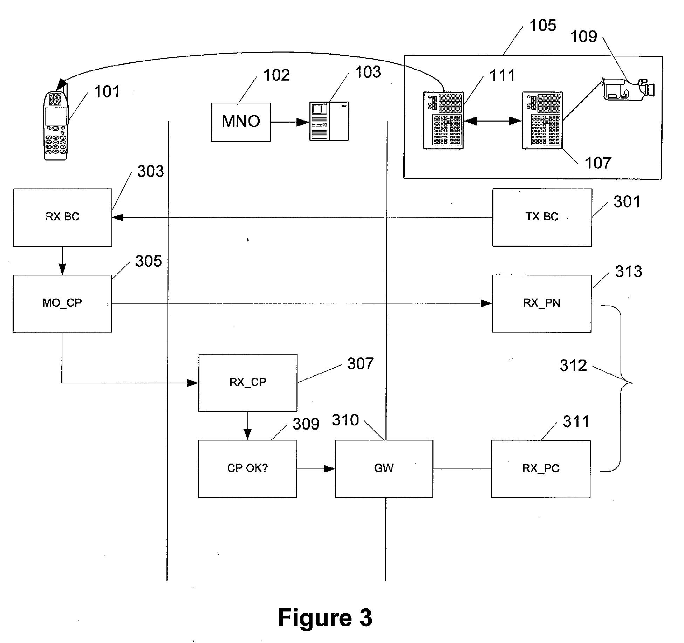

In figure 3 a method illustrated of performing payment is illustrated while receiving the real time content. Initially the user could receive an indication 301 from the service provider that the credit is low and that the user needs to buy credits (BC). The mobile phone receives the indication 303 and the user could enter a menu to buy more credit e.g. by accepting the offer to send a mobile originated payment SMS being offered from e.g. the player application on the mobile phone which the user must confirm in order for it to be send. Next the user or mobile operator can accept the payment 305 by transmitting content payment instruction 305 to the payment system 102 and 103. This could e.g. be performed by the user confirming the payment SMS and sending the SMS to a premium charged number normally owned by an Aggregator 103, who acts on behalf of the Service Provider 105. The SMS info could be sent from the mobile phone to the Aggregator's SMS-gateway. The content payment instruction is received 307 at the Mobile Network Operator 102 who checks the validity of the payment and if the payment is valid a payment clearance 309 is send through the Aggregator's SMS Gateway 310 to the service provider being received at the distribution server at 311. This could e.g. be by sending an XML-file to the distribution server of the service provider.

This process is subjected to delays in transmission and computing and to the traffic congestion in the various nodes along the communication path. The mobile originated SMS may therefore be minutes to travel from the player application at the consumer device to the distribution server and if the user is looking at a high priced video stream, he may run out of credits and the service will be terminated long before the mobile originated payment arrives. To mitigate this delay and congestion problem the player will at 305, immediately when the user has confirmed to send the mobile originated SMS and it has been transmitted, also send a message 305 directly to the service provider 105 containing the credit purchase information. This is possible since the single protocol can carry multi source data information and the time for this message is just a few milliseconds. Now the service provider 105 knows that user has requested and confirmed a credit purchase and the service can continue.

The amount of credit purchased is stored as un-validated credit in e.g. a service provider database and once the payment clearance 311 arrives the un-validated credit is transferred to the validated credit in the database. When the un-validated credit is stored in the database, the service provider sends a credit display update to the player application, so the user can follow the account status. The time 312 from receiving the payment notification 313 to receiving the payment clearance 311 should then be within a predefined time interval in order to continue delivering said real time content to said consumer device after the expiry of said time interval 312.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word 'comprising' does not exclude the presence of other elements or steps than those listed in a claim. The invention can be implemented by means of hardware comprising several distinct elements, and by means of a suitably programmed computer. In a device claim enumerating several means, several of these means can be embodied by one and the same item of hardware. The mere fact that certain measures are recited in mutually different dependent claims does not indicate that a combination of these measures cannot be used to advantage.

## Claims

1. A method for a consumer device of performing payment of real time content received from a service provider, wherein said payment is performed while receiving said real time content on said consumer device, said method comprises transmitting a user accepted payment instruction to a payment central, followed by transmitting a payment notification to said service provider, said service provider being adapted for receiving said payment notification at said service provider and continuing to deliver said real time content to said consumer device based on said received payment notification.

2. A method according to claim 1, wherein said consumer device is a mobile phone.

3. A method according to claim 2, wherein said payment instructions are transmitted as a SMS from said mobile phone to said payment central.

4. A method according to claim 1, wherein said service provider, after having received said payment notification, continues to deliver said real time content to said consumer device for a predefined time interval within which said service provider needs to receive a payment clearance initiated by said payment central in order to continue delivering said real time content to said device after the expiry of said time interval.

5. A method according to claim 1-4, wherein said consumer device receives a request from sad service provider when said payment is necessary.

6. A method according to claim 1-5, wherein said service provider and said consumer device communicates said real time content and said payment notification using a single port communication protocol, wherein data related to payment notifications and data related to real time content are transmitted in successive blocks/packages via a single port.

7. A method according to claim 1-5, wherein said real time content is video content.
